# EUROPEAN PATENT APPLICATION

(11) **EP 3 792 817 A1**
(43) Date of publication of application: **17.03.2021**
(21) Application number: 19207306.2
(22) Date of filing: 05.11.2019
(51) Int. Cl.: G06K 9/00, G06K 9/62

(54) **METHOD AND SYSTEM FOR HUMAN BEHAVIOR IDENTIFICATION**

(30) Priority: 10.09.2019 US 201916565512
(71) Applicant: XRSpace CO., LTD., Taoyuan City 330 (TW)
(72) Inventor: HSIEH, Yi-Kang, 310 Zhudong Township (TW); HUANG, Ching-Ning, 111 Taipei City (TW); HSU, Chien-Chih, 502 Fenyuan Township, (TW)
(74) Representative: Emde, Eric

(57) **Abstract**

A behavior understanding system (100) and a behavior understanding method are provided. The motion of a human body portion (B1, B2, B3, B4, B5) is sensed for a time period. A sequence of motion sensing data of the sensor (110) is obtained. At least two comparing results respectively corresponding to at least two timepoints (t1, t2, t3, t4) within the time period are generated according to the motion sensing data. The comparing result are generated through comparing the motion sensing data with base motion data. The base motion data is related to multiple base motions. A behavior information of the human body portion (B1, B2, B3, B4, B5) is determined according to the comparing results. The behavior information is related to a behavior formed by at least one of the base motions. Accordingly, the accuracy of behavior understanding can be improved, and the embodiments may predict the behavior quickly.

## Description

### TECHNICAL FIELD

The present disclosure generally relates to a method for estimating behavior, in particular, to a behavior understanding system and a behavior understanding method.

### BACKGROUND

The problems of human motion analysis and behavior understanding exist for many years and have attracted many researches because of its large panel of potential applications.

However, the task of understanding human behaviors is still difficult due to the complex nature of the human motion. What further complicates the task is the necessity of being robust to execution speed and geometric transformations, like the size of the subject, its position in the scene and its orientation with respect to the sensor. Additionally, in some contexts, human behaviors imply interactions with objects. While such interactions can help to differentiate similar human motions, they also add challenges, like occlusions of body parts.

### SUMMARY OF THE DISCLOSURE

Accordingly, the present disclosure is directed to a human behavior understanding system and a human behavior understanding method, in which the behavior of the user is estimated according to one or more base motions.

In one of the exemplary embodiments, a behavior understanding method includes, but not limited to, the following steps. A sequence of motion sensing data is obtained, and the motion sensing data is generated through sensing a motion of a human body portion for a time period. At least two comparing results respectively corresponding to at least two timepoints are generated. The comparing results are generated through comparing the motion sensing data with base motion data. The base motion data is related to multiple base motions. A behavior information of the human body portion is determined according to the comparing results. The behavior information is related to a behavior formed by at least one base motion.

In one of the exemplary embodiments, a behavior understanding system includes, but not limited to, a sensor and a processor. The sensor is used for sensing a motion of a human body portion for a time period. The processor is configured to perform the following steps. At least two comparing results respectively corresponding to at least two timepoints are generated. The timepoints are within the time period. The comparing results are generated through comparing the motion sensing data with motion base data. The base motion data is related to multiple base motions. A behavior information of the human body portion is determined according to the comparing results. The behavior information is related to a behavior formed by at least one base motion.

In light of the foregoing, according to the behavior understanding system and the behavior understanding method provided in one or more embodiments, the motion sensing data obtained at different timepoints is compared with predefined base motions. Each predefined behavior is associated with one or more specific base motions. Whether the base motions corresponding to the motion sensing data at multiple timepoints are matched with a predefined behavior is checked, to determine the currently behavior information of a human body portion. Accordingly, the accuracy of behavior understanding can be improved, and the embodiments may predict the behavior information quickly.

It should be understood, however, that this Summary may not contain all of the aspects and embodiments of the present disclosure, is not meant to be limiting or restrictive in any manner, and that the invention as disclosed herein is and will be understood by those of ordinary skill in the art to encompass obvious improvements and modifications thereto.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 is a block diagram illustrating a behavior understanding system according to one of the exemplary embodiments of the disclosure.
FIG. 2 is a schematic diagram illustrating a behavior understanding system according to one of the exemplary embodiments of the disclosure.
FIG. 3 is a flowchart illustrating a behavior understanding method according to one of the exemplary embodiments of the disclosure.
FIG. 4 is a flowchart illustrating a motion detection method according to one of the exemplary embodiments of the disclosure.
FIG. 5 is a schematic diagram illustrating a behavior understanding at different timepoints according to one of the exemplary embodiments of the disclosure.
FIGS. 6A and 6B are schematic diagrams illustrating two behaviors according to one of the exemplary embodiments of the disclosure.

### DESCRIPTION OF THE EMBODIMENTS

Reference will now be made in detail to the present preferred embodiments of the disclosure, examples of which are illustrated in the accompanying drawings. Wherever possible, the same reference numbers are used in the drawings and the description to refer to the same or like parts.

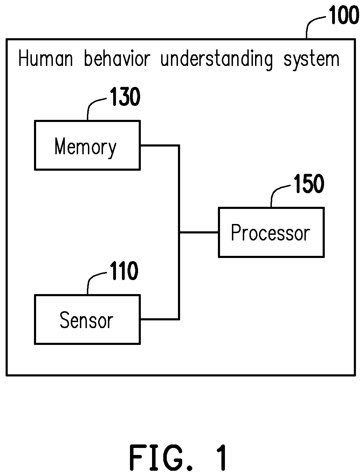

FIG. 1 is a block diagram illustrating a behavior understanding system 100 according to one of the exemplary embodiments of the disclosure. Referring to FIG. 1, the behavior understanding system 100 includes, but not limited to, one or more sensor 110, a memory 130 and a processor 150. The behavior understanding system 100 can be adapted for VR, AR, MR, XR or other reality related technology.

The sensor 110 may be an accelerometer, a gyroscope, a magnetometer, a laser sensor, an inertial measurement unit (IMU), an infrared ray (IR) sensor, an image sensor, a depth camera, or any combination of aforementioned sensors. In the embodiment of the disclosure, the sensor 110 is used for sensing the motion of one or more human body portions for a time period. The human body portion may be a hand, a head, an ankle, a leg, a waist, or other portions. The sensor 110 can sense the motion of the corresponding human body portion, to generate a sequence of motion sensing data from the sensing result of the sensor 110 (e.g. camera images, sensed strength values, etc.) at multiple timepoints within the time period. For one example, the motion sensing data comprises a 3-degree of freedom (3-DoF) data, and the 3-DoF data is related to the rotation data of the human body portion in three-dimensional (3D) space, such as accelerations in yaw, roll and pitch. For another example, the motion sensing data comprises a relative position and/or displacement of a human body portion in the 2D/3D space. It should be noticed that, the sensor 110 could be embedded in a handheld controller or a wearable apparatus, such as a wearable controller, a smart watch, an ankle sensor, a head-mounted display (HMD), or the likes.

Memory 130 may be any type of a fixed or movable Random-Access Memory (RAM), a Read-Only Memory (ROM), a flash memory or a similar device or a combination of the above devices. The memory 130 can be used to store program codes, device configurations, buffer data or permanent data (such as motion sensing data, comparing results, information related to base motions, etc.), and these data would be introduced later.

The processor 150 is coupled to the memory 130, and the processor 150 is configured to load the program codes stored in the memory 130, to perform a procedure of the exemplary embodiment of the disclosure. Functions of the processor 150 may be implemented by using a programmable unit such as a central processing unit (CPU), a microprocessor, a microcontroller, a digital signal processing (DSP) chip, a field programmable gate array (FPGA), etc. The functions of the processor 150 may also be implemented by an independent electronic device or an integrated circuit (IC), and operations of the processor 150 may also be implemented by software.

It should be noticed that, the processor 150 may or may not be disposed at the same apparatus with the sensor 110. However, the apparatuses respectively equipped with the sensor 110 and the processor 150 may further include communication transceivers with compatible communication technology, such as Bluetooth, Wi-Fi, IR, or physical transmission line, to transmit/ receive data with each other.

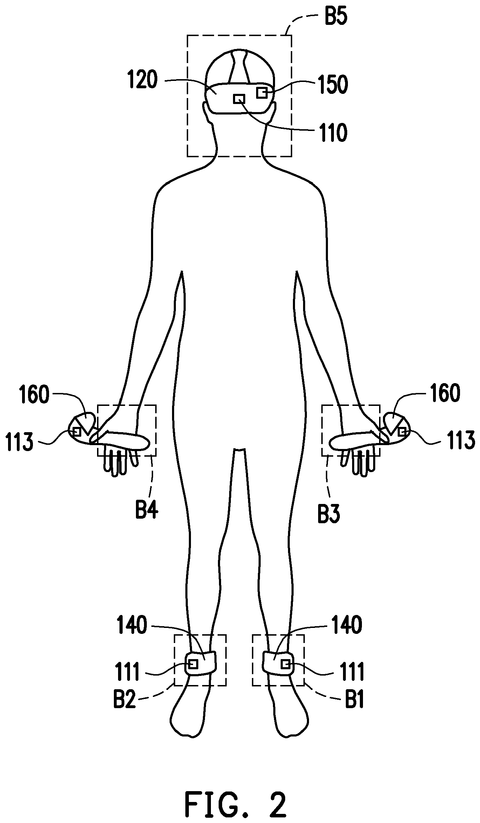

FIG. 2 is a schematic diagram illustrating a behavior understanding system 200 according to one of the exemplary embodiments of the disclosure. Referring to FIG. 2, the behavior understanding system 200 includes a HMD 120, two ankle sensors 140, and two handheld controllers 160. IMUs 111 and 113 (i.e., the sensor 110) are embedded in the ankle sensors 140 and the handheld controllers 160, to obtain a first part of the motion sensing data. A stereo camera 115 (i.e., the sensor 110) and the processor 150 are embedded in the HMD 120, and the stereo camera 115 may configured to capture camera images toward one or more of the human body portions B1-B4, to determine a second part of the motion sensing data.

In some embodiments, the sequence of the motion sensing data may be generated by combining the first part of motion sensing data and the second part of motion sensing data for the same human body. For example, one motion sensing data is determined based on the first part of motion sensing data at one or more timepoints, and another is determined based on the second part of motion sensing data at one or more other timepoints. For another example, the first part of motion sensing data and the second part of motion sensing data at one timepoint are fused with a weight relation of the first part and the second part, to determine one of the sequence of the motion sensing data.

In some embodiments, the sequence of the motion sensing data may be generated according to the first part of motion sensing data or the second part of motion sensing data solely. For example, one of the first part of motion sensing data and the second part of motion sensing data is selected to determine the sequence of the motion sensing data, and the unselected motion sensing data would be omitted.

In some embodiments, the HMD 120 may further include another IMU (not shown), to obtain rotation information of human body portions B5 (i.e., the head). The HMD 120, the ankle sensors 140, and the handheld controllers 160 may communicate with each other through compatible communication technology.

It should be noticed that, the behavior understanding system 200 is merely an example to illustrate the disposing and communication manners of sensor 110 and processor 150. However, there are still may other implementations of the behavior understanding system 100, and the present disclosure is not limited thereto.

To better understand the operating process provided in one or more embodiments of the disclosure, several embodiments will be exemplified below to elaborate the operating process of the behavior understanding system 100 or 200. The devices and modules in the behavior understanding system 100 or 200 are applied in the following embodiments to explain the control method provided herein. Each step of the control method can be adjusted according to actual implementation situations and should not be limited to what is described herein.

The terminology "behavior" in the embodiment of the present disclosure is defined with three types: human gestures, human actions and human activities. Each type of behaviors is characterized by a specific degree of motion complexity, a specific degree of human-object interaction and a specific duration of the behavior. For example, the gesture behaviors have low complexity and short duration, the action behaviors have medium complexity and intermediate duration, and the activity behaviors have high complexity and long duration. It is not possible to interact with another object for the gesture behaviors, and it is possible to interact with another object for the action behaviors and the activity behaviors. One gesture behavior may be characterized by a motion of only one part of the human body portion (often the arm). One action behavior may be characterized by a slightly more complex movement, which can also be a combination of multiple gestures, or characterized by motion of multiple human body portions. In addition, the activity behavior may be characterized by a high level of motion complexity, where multiple movements or actions are performed successively.

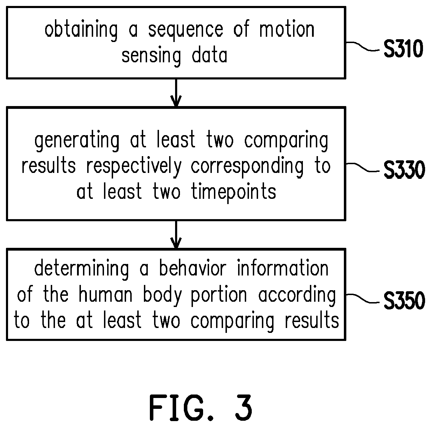

FIG. 3 is a flowchart illustrating a behavior understanding method according to one of the exemplary embodiments of the disclosure. Referring to FIG. 3, a motion sensing data is obtained through the sensor 110 (step S310). Regarding different types of the sensor 110, acceleration, rotation, magnetic force, orientation, distance and/or position (called sensing result thereafter) for the motion of corresponding human body portion in a 2D/3D space may be obtained, and one or more sensing results of the sensor 110 would become the motion sensing data of the human body portion.

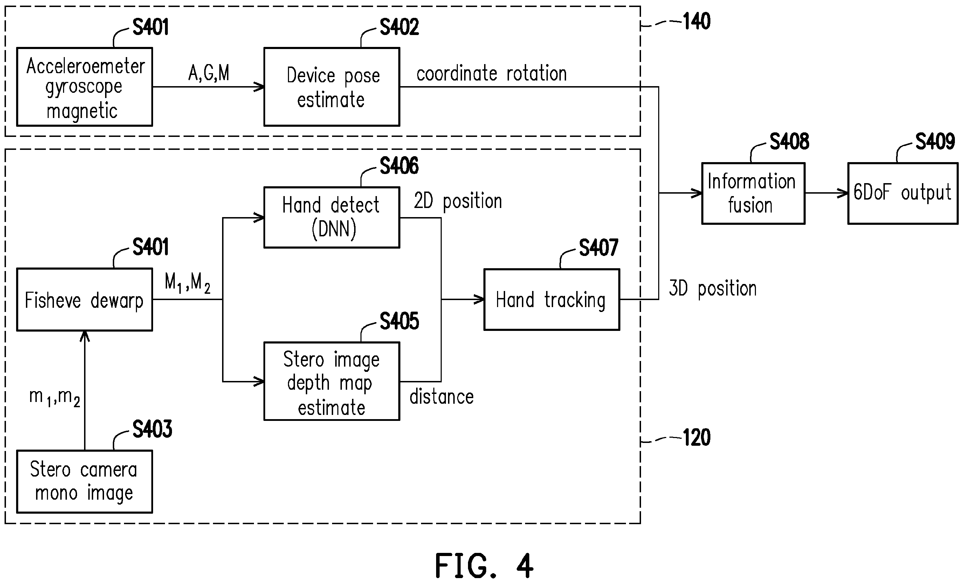

Taking the behavior understanding system 200 as an example, 6-DoF information of the human body portion B1 can be determined. FIG. 4 is a flowchart illustrating a motion detection method according to one of the exemplary embodiments of the disclosure. Referring to FIGS. 2 and 4, the ankle sensor 140 includes IMU 111 with functions of accelerometer, gyroscope and magnetic sensor, and acceleration A, rotation (which may include orientation and angular velocity) G, and magnetic field M of human body portion B1 are obtained (step S401). The pose of the human body portion B1 would be estimated according to the acceleration A, the rotation G and the magnetic force M sensed on the human body portion B1 (step S402), and the rotation information of the human body portion B1 in a predefined coordinate system can be determined. For example, the pose may be rotating up, swiveling left, etc.

On the other hand, the stereo camera 115 captures mono images m₁, m₂ toward the human body portion B1 (step S403). The processor 150 may perform a fisheye dewarp process on the mono images m₁, m₂, and the dewarped images M₁, M₂ are generated (step S404). The human body portion B1 in the dewarped images M₁, M₂ would be identified through a machine learning technology (such as deep learning, artificial neural network (ANN), or support vector machine (SVM), etc.). The sensing strength and the pixel position corresponding to the human body portion B1 then can be used for estimating depth information of the human body portion B1 (i.e., a distance relative to the HMD 120) (step S405) and estimating 2D position of the human body portion B1 at a plane parallel to the stereo camera 115 (step S406). The processor 150 can generate a 3D position in the predefined coordinate system according to the distance and the 2D position of the human body portion B1 estimated at steps S405 and S406 (step S407). Then, the rotation and 3D position of the human body portion B1 in the predefined coordinate system can be fused (step S408), and a 6-DoF information, which would be considered as the motion sensing data, can be outputted (step S409).

In another embodiment, the 3D position of the human body portion B1 can be determined according to the 3D position of the human body portion B5 and the rotation information of the human body portion B1. Specifically, a 6-DoF sensor may be equipped on the human body portion B5, so as to obtain the position and the rotation information of the human body portion B5. On the other hand, the rotation information of the human body portion B1 can be obtained as described at step S402. Then, a displacement of the human body portion B1 can be estimated through double integral on the detected acceleration of the human body portion B1 in three axes. However, when a user walks, an error of the estimated displacement of the human body portion B1 of the user may be accumulated, and the estimated position of the human body portion B1 would be not accurate. In order to improve the accuracy of the estimated position, the position of the human body portion B5 can be considered as a reference point of the user, and the estimated position of the human body portion B1 can corrected according to the reference point. While walking or running, the displacement of the human body portion B5 would correspond to the displacement of the human body portion B1 with a specific pose, such as lifting leg, unbending leg, other any other pose of walking or running. The position of the human body portion B1 with the specific pose can be considered as a reset position, and the reset position has a certain relative position corresponding to the reference point. When the processor 150 determines the user is walking or running according to the displacement of the human body portion B1, the estimated positon of the human body portion B1 can be corrected at the reset position according to the certain relative position corresponding to the reference point, so as to remove the error of estimation generated by the IMU 111.

It should be noticed that, there are still many other embodiments for obtaining the motion sensing data. For example, a 6-DoF sensor may be equipped on the human body portion B1, so as to make the 6-DoF information be the motion sensing data. For another example, a depth camera may be equipped on the human body portion B1, so as to make the depth information detected be the motion sensing data.

Referring to FIG. 3, the processor 150 may generate at least two comparing results respectively corresponding to at least two timepoints (step S330). Specifically, each comparing result is generated through comparing the motion sensing data with base motion data. The base motion data is related to multiple base motions, and the base motion data may include specific motion sensing data for each base motion. Taking the human body portion B1 or B2 as an example, the base motion may be lifting, pointing, kicking, stepping, or jumping. The lifting base motion may be related to a specific pose of motion sensing data. One or more base motions are performed sequentially to form a behavior. That means, each behavior is associated with one or more base motions with a time sequence. The time sequence includes multiple timepoints. One behavior may be divided into one or multiple base motions at multiple timepoints. For example, a kicking behavior of the human body portion B1 includes the lifting and kicking base motions sequentially at two timepoints. It should be noticed that, the duration between two adjacent timepoints may be fixed or variable based on actual requirement.

In some embodiments, the motion sensing data at each timepoint would be compared with multiple predefined base motions in the base motion data, to generate a comparing result. Each predefined base motion is associated with a specific motion sensing data, such as a specific position and a specific orientation in 3D space. In addition, because an order of multiple base motions is essential condition to form one behavior, the comparing results at different timepoints would be stored in the memory 130 for later use. It should be noticed that, the order described in the embodiment is related that base motions are sorted by happening timepoint thereof.

In some embodiments, the specific motion sensing data of multiple base motions could be training samples for training a classifier or a neural network model based on the machine learning technology. The classifier or the neural network model can be used to identify which base motion corresponds to the motion sensing data obtained at step S310 or determine a likelihood that the motion of the detected human body portion is one of the base motions.

In some embodiments, the comparing result may be the most similar one or more base motions or likelihoods respectively corresponding to different base motions.

In some embodiments, to quantize the likelihood, a matching degree between the motion sensing data and the base motion data can be used to represent one likelihood that the motion of the detected human body portion is a specific base motion. The matching degree could be a value from 0 to 100 percentages to present the possibility that motion of the human body portion is a specific base motion, and the summation of the matching degrees corresponding to all predefined base motions could be, for example, 100 percentages. For example, the comparing result at a timepoint includes 10 percentages of lifting base motion, 0 percentage of pointing base motion, 75 percentages of kicking base motion, 3 percentages of stepping base motion, and 22 percentages of jumping base motion.

In some embodiments, one or more base motions could be selected as a representative of a comparing result according to the matching degrees corresponding to all base motions at each timepoint. For example, the one or more base motions with the highest matching degree could be the representative of the comparing result. For another example, the one or more base motions with matching degree lager than a threshold (such as 60, 75 or 80 percentages) could be the representative of the comparing result.

It should be noticed that, the comparing result includes multiple matching digresses corresponding to all predefined base motions in the aforementioned embodiments. However, there are still may other implementations for determining the comparing result. For example, the comparing result may include difference between the motion sensing data obtained at step S310 and the specific motion sensing data of the base motions, and the one or more base motions with less difference could be the representative of a comparing result. In addition, the base motions may be selected for the comparison with the motion sensing data first according to the limitation of the geometric structure of the human body. For example, most of human cannot stretch their arm horizontally backward over a specific degree relative to their chests.

In some embodiments, in addition to the predefined base motions, a non-predefined base motion different from the predefined base motions in the base motion data could be trained by using the sequence of motion sensing data and the machine learning algorithm. For example, if there is none of the predefined base motions with matching degree lager than a threshold, the motion sensing data at current timepoint would be a training sample for training a classifier or a neural network model of a new base motion.

Referring to FIG. 3, the processor 150 may determine a behavior information of the human body portion according to the at least two comparing results (step S350). As mentioned before, one or more base motions are performed sequentially to form one behavior. The behavior information is related to a behavior formed by at least one of the base motions. The comparing results at different timepoints would be combined based on their order, to determine which predefined behavior is matched with the combination of the comparing results. Each predefined behavior is associated with one or more specific base motions in an order. In one embodiment, a continuity of the comparing results determined at step S330 is determined. The continuity among these determined base motions (i.e., the representatives of the comparing results), is related to the order in which the base motions are performed. For example, a base motion at the third timepoint is performed after another base motion at the second timepoint. The behavior of the human body portion would be determined according to the continuity. The processor 150 may select one or more predefined behaviors including a determined base motion corresponding to a motion sensing data at an earlier time pint, and the selected predefined behaviors would be checked whether further include another determined base motion at a subsequent timepoint. Alternatively, multiple comparing results in one combination would be compared with the predefined behaviors at the same time, and the processor 150 may output a result according to the combination directly. The result is related whether the combination is matched with one predefined behavior. The behavior information may include, but not limited to, a determined behavior, multiple base motions forming the determined behavior, and corresponding sequence of motion sensing data.

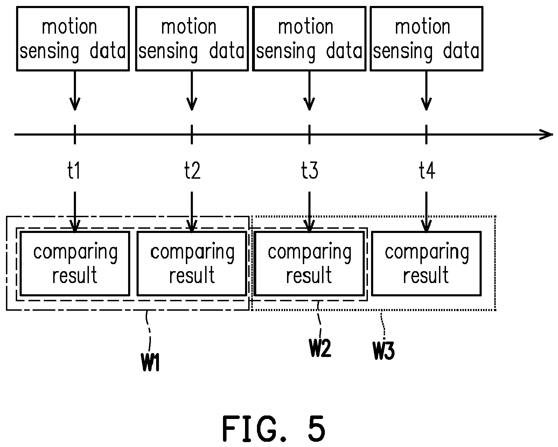

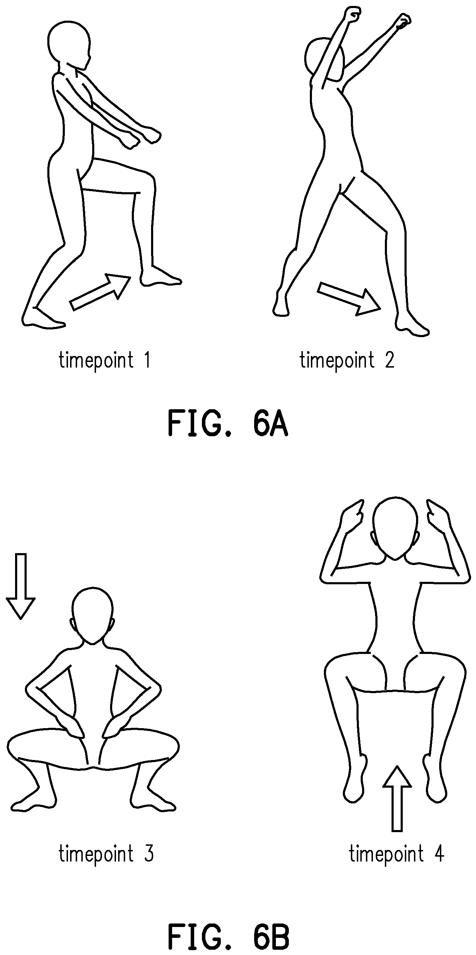

FIG. 5 is a schematic diagram illustrating a behavior understanding at different timepoints according to one of the exemplary embodiments of the disclosure. FIG. 6A and 6B are schematic diagrams illustrating two behaviors according to one of the exemplary embodiments of the disclosure. Referring to FIG. 5 and FIG. 6A, regarding the human body portion B1, for example, a lifting base motion is determined according to the motion sensing data at the first timepoint t1, and a pointing base motion is determined according to the motion sensing data at the second timepoint t2. Two determined base motions within the time window W1 would be combined as one combination. The time window in the embodiment is related to the number of the comparing results in one combination. Then, the processor 150 may determine that a stepping behavior is performed according the combination (i.e., the lifting and kicking base motions). The continuity is related that the pointing base motion is performed after the lifting base motion.

Referring to FIG. 5 and FIG. 6B, regarding the human body portions B1 and B2, for example, a deep squatting base motion is determined according to the motion sensing data at the third timepoint t3, and a jumping base motion is determined according to the motion sensing data at the fourth timepoint t4. Two determined base motions within the time window W3 would be combined as one combination. Then, the processor 150 may determine that a jumping behavior is performed according the combination (i.e., the deep squatting and jumping base motions). The continuity is related that the jumping base motion is performed after the deep squatting base motion.

Accordingly, one behavior may be predicted correctly without obtaining further motion sensing data at subsequent timepoints.

It should be noticed that, the time window may be variable. In response to the comparing results being not matched with any predefined behavior, the time window may be enlarged to include more comparing results in one combination. For example, referring to FIG. 5, the time window W1 is enlarged to become the time window W2, and a combination within the time window W2 includes three comparing results at three timepoints. The combination within the time window W2 would be determined whether be matched with any predefined behavior.

On the other hand, in response to the comparing results being matched with one predefined behavior, the time window may be reduced or maintained. For example, referring to FIG. 5, the time window W2 is reduced to become the time window W3 after a combination within the time window W2 is matched with one predefined behavior. Another combination within the time window W3 includes two comparing results at two timepoints t3 and t4. Then, the processor 150 may determine whether the combination within the time window W3 is matched with any predefined behavior.

It should be noticed that, the value of matching degree may be related to the confidence that the comparing result is correct. In one embodiment, the matching degree of the representative of the comparing result at each timepoint may be compared with a threshold. The threshold may be, for example, 50, 70 or 80 percentages. In response to the matching degree of the representative being larger than the threshold, the representative would be used to determine the behavior of the human body portion. For example, the threshold is 60 percentages, and a jumping base motion with 75 percentages would be a reference to determine a behavior.

On the other hand, in response to the matching degree of the representative being not larger than the threshold, the representative would be not used to determine the behavior of the human body portion. The representative would be abandoned or weighted with lower priority. For example, the threshold is 80 percentages, and a kicking base motion with 65 percentages would be abandoned, and the kicking base motion would not be a reference to determine a behavior. For another example, the threshold is 60 percentages, a pointing base motion with 65 percentages at the first timepoint, a lifting base motion with 55 percentages at the second timepoint, and a kicking base motion with 80 percentages at the third timepoint are determined. The processor 150 may not consider that a kicking behavior is performed by the three base motions.

In addition, one behavior may be related to base motions of multiple human body portions. For example, referring to FIG. 2, it is assumed that the behavior of the user is running. At one timepoint, the motion of the human body portion B1 may correspond to a lifting base motion, and the motion of the body porting B2 may correspond to a pointing base motion. In one embodiment, a second motion sensing data generated through sensing a motion of another human body portion would be obtained, at least two second comparing results respectively corresponding to the at least two timepoints are determined according the second motion sensing data, and the behavior of the human body portion is determined according to the at least two comparing results determined at the step S330 and the at least two second comparing results. The way to obtain the second motion sensing data and to determine the second comparing results may be the same with or similar with the steps S310 and S330, respectively, and the related description would be omitted. The difference with the aforementioned embodiment is that, in the present embodiment, some predefined behaviors of one human body portion are associated with multiple specific base motions of multiple human body portions. The processor 150 may check whether the determined base motions of two or more human body portions are matched with one predefined behavior.

For example, a lifting base motion is determined according to the motion sensing data of the human body portion B1 at the first timepoint t1, and a pointing base motion is determined according to the motion sensing data of the human body portion B1 at the second timepoint t2. In addition, a pointing base motion is determined according to the motion sensing data of the human body portion B2 at the first timepoint t1, and a lifting base motion is determined according to the motion sensing data of the human body portion B2 at the second timepoint t2. Then, the processor 150 may determine that a running behavior is performed according the combination of determined base motions of the human body portions B1 and B2.

It should be noticed that, based one different design requirement, in other embodiments, one or more predefined behaviors may be associated with multiple base motions of three or more human body portions. The processor 150 may determine whether comparing results of these human body portions are matched with any predefined behavior.

After the behavior information of the human body portion is determined, a motion of an avatar or an image presented in a display can be modified according to the determined behavior. For example, the behavior of legs is running, and the avatar may run accordingly. For another example, the behavior of a head is raising, and a sky would be showed in the image of the display.

In summary, the exemplary embodiments described above depicted a behavior understanding system and a behavior understanding method. The motion of a specific human body portion would be determined whether being matched with one or more base motions at each timepoint first. Two or more determined base motions would be compared with multiple predefined behaviors, to determine one matched behavior. The continuity and matching degree are considered as conditions for estimating the behavior. Accordingly, the accuracy of behavior understanding can be improved, and the embodiments may predict the behavior quickly.

## Claims

1. A human behavior understanding method, **characterized by** comprising:
obtaining a sequence of motion sensing data, wherein the motion sensing data is generated through sensing a motion of a human body portion (B1, B2, B3, B4, B5) for a time period;
generating at least two comparing results respectively corresponding to at least two timepoints (t1, t2, t3, t4), wherein the at least two timepoints (t1, t2, t3, t4) are within the time period, and the at least two comparing results are generated through comparing the motion sensing data with base motion data, wherein the base motion data is related to a plurality of base motions; and
determining a behavior information of the human body portion (B1, B2, B3, B4, B5) according to the at least two comparing results, wherein the behavior information is related to a behavior formed by at least one of the base motions.

2. A human behavior understanding system (100), comprising:
a sensor (110), sensing a motion of a human body portion (B1, B2, B3, B4, B5) for a time period; and
a processor (150), **characterized in that** processor (150) is configured to perform:
obtaining a sequence of motion sensing data of the sensor (110);
generating at least two comparing results respectively corresponding to at least two timepoints (t1, t2, t3, t4), wherein the at least two timepoints (t1, t2, t3, t4) are within the time period, and the at least two comparing results are generated through comparing the motion sensing data with base motion data, wherein the base motion data is related to a plurality of base motions; and
determining a behavior information of the human body portion (B1, B2, B3, B4, B5) according to the at least two comparing results, wherein the behavior information is related to a behavior formed by at least one of the base motions.

3. The human behavior understanding method of claim 1, **characterized in that** the step of generating the at least two comparing results respectively corresponding to the at least two timepoints (t1, t2, t3, t4) comprises:
determining a matching degree between the motion sensing data and the base motion data, wherein each of the comparing results comprises the matching degree, and the matching degree is related to a likelihood that the sensing motion data is one of the base motions, or the human behavior understanding system (100) of claim 2, **characterized in that** the processor (150) is configured to perform:
determining a matching degree between the motion sensing data and the base motion data, wherein each of the comparing results comprises the matching degree, and the matching degrees is related to a likelihood that the motion is one of the base motions.

4. The human behavior understanding method of claim 3, **characterized in that** the step of determining the matching degrees respectively corresponding to the base motions according to the motion sensing data at each of the timepoints (t1, t2, t3, t4) comprises:
selecting one of the base motions as a representative of one of the comparing results according to the matching degrees at each of the timepoints (t1, t2, t3, t4), or the human behavior understanding system (100) of claim 3, **characterized in that** the processor (150) is configured to perform:
selecting one of the base motions as a representative of one of the comparing results according to the matching degrees at each of the timepoints (t1, t2, t3, t4).

5. The human behavior understanding method according to claim 4, **characterized in that** the step of determining the behavior information of the human body portion (B1, B2, B3, B4, B5) according to the at least two comparing results comprises:
comparing the matching degree of the representative with a threshold;
determining the behavior information of the human body portion (B1, B2, B3, B4, B5) in response to the matching degree of the representative being larger than the threshold; and
not determining the behavior information of the human body portion (B1, B2, B3, B4, B5) in response to the matching degree of the representative being not larger than the threshold, or the human behavior understanding system (100) of claim 4, **characterized in that** the processor (150) is configured to perform:
comparing the matching degree of the representative with a threshold;
determining the behavior information of the human body portion (B1, B2, B3, B4, B5) in response to the matching degree of the representative being larger than the threshold; and
not determining the behavior information of the human body portion (B1, B2, B3, B4, B5) in response to the matching degree of the representative being not larger than the threshold.

6. The human behavior understanding method of claim 1, **characterized in that** the step of determining the behavior information of the human body portion (B1, B2, B3, B4, B5) according to the at least two comparing results comprises:
determining a continuity of the at least two comparing results, wherein the continuity is related to an order in which at least two of the base motions are performed; and
determining the behavior information of the human body portion (B1, B2, B3, B4, B5) according to the continuity, or the human behavior understanding system (100) of claim 2, **characterized in that** the processor (150) is configured to perform:
determining a continuity of the at least two comparing results, wherein the continuity is related to an order in which at least two of the base motions are performed; and
determining the behavior information of the human body portion (B1, B2, B3, B4, B5) according to the continuity.

7. The human behavior understanding method of claim 1, **characterized in that** the step of obtaining the sequence of motion sensing data comprises:
obtaining a plurality of camera images; and
determining the sequence of motion sensing data from the camera images, or the human behavior understanding system (100) of claim 2, **characterized in that** the sensor (110) obtains a plurality of camera images, and the processor (150) is configured to perform:
determining the sequence of motion sensing data from the camera images.

8. The human behavior understanding method of claim 1, **characterized in that** the step of obtaining the sequence of motion sensing data comprises:
obtaining the sequence of motion sensing data from an inertial measurement unit (IMU) (111, 113), or the human behavior understanding system (100) of claim 2, **characterized in that** the sensor (110) is an IMU (111, 113), and the processor (150) is further configured to perform:
obtaining the sequence of motion sensing data from the IMU (111, 113).

9. The human behavior understanding method of claim 1, **characterized in that** the step of obtaining the sequence of motion sensing data comprises:
obtaining a plurality of camera images; and
determining the sequence of motion sensing data according to the camera images and a sensing result from an IMU (111, 113), or the human behavior understanding system (100) of claim 2, **characterized in that** the sensor (110) obtains a plurality of camera images, and the human behavior understanding system (100) further comprises:
a second sensor, wherein the second sensor is an IMU (111, 113), and the processor (150) is further configured to perform:
determining the sequence of motion sensing data according to the camera images and a sensing result from the IMU (111, 113).

10. The human behavior understanding method of claim 1, **characterized by** further comprising:
adding a non-predefined base motion different from the base motions into the base motion data by using the sequence of motion sensing data and a machine learning algorithm, or the human behavior understanding system (100) of claim 2, **characterized in that** the processor (150) is configured to perform:
adding a non-predefined base motion different from the base motions into the base motion data by using the sequence of motion sensing data and a machine learning algorithm.
